# EUROPÄISCHE PATENTSCHRIFT

(11) **EP 1 716 394 B1**
(45) Veröffentlichungstag und Bekanntmachung des Hinweises auf die Patenterteilung: **30.06.2010**
(21) Anmeldenummer: 04820844.1
(22) Anmeldetag: 19.11.2004
(51) Int. Cl.: G01F 1/66

(54) **ULTRASCHALLSTRÖMUNGSSENSOR MIT VERSCHRÄNKTEN SENDE- UND EMPFANGSELEMENTEN**
ULTRASONIC FLOW SENSOR COMPRISING STAGGERED TRANSMITTING AND RECEIVING ELEMENTS
DEBITMETRE A ULTRASONS DOTE D'ELEMENTS D'EMISSION ET DE RECEPTION ENTRECROISES

(30) Priorität: 29.12.2003 DE 10361763
(43) Veröffentlichungstag der Anmeldung: 02.11.2006
(73) Patentinhaber: Robert Bosch GmbH, 70442 Stuttgart (DE)
(72) Erfinder: KONZELMANN, Uwe, 71679 Asperg (DE); LANG, Tobias, 70197 Stuttgart (DE)
(86) Internationale Anmeldenummer: PCT/EP2004/053023
(87) Internationale Veröffentlichungsnummer: WO 2005/064283

(56) Entgegenhaltungen:
- WO-A-02/055966
- DE-A1- 4 416 826
- US-A- 5 372 047

## Beschreibung

### Technisches Gebiet

Mittels Durchflussmessern wird der Luftdurchsatz im Ansaug- bzw. Ladetrakt einer Verbrennungskraftmaschine gemessen. Da es bei dem chemischen Vorgang der Verbrennung auf die Massenverhältnisse von Kraftstoff und Luft zueinander ankommt, ist der Massendurchfluss der Luft im Ansaug- /Ladetrakt der Verbrennungskraftmaschine zu messen, wozu auch Volumen- oder Staudruckmessende Verfahren herangezogen werden. Der maximal zu messende Luftmassenfluss liegt je nach Motorleistung im Bereich zwischen 400 und 1200 kg pro Stunde. Aufgrund des niedrigen Leerlaufbedarfes moderner Verbrennungskraftmaschinen beträgt das Verhältnis von minimalem zu maximalem Luftdurchsatz zwischen 1: 90 und 1:100.

### Stand der Technik

Aus dem Kraftfahrttechnischen Taschenbuch/ Bosch 23., aktualisierte und erweiterte Auflage - Braunschweig; Wiesbaden: Vieweg, 1999, ISBN 3-528-03876-4 Seite 115 ist eine Ultraschall- Durchflussmessanordnung bekannt. Mittels dieser Anordnung lässt sich die Laufzeit t eines Schallimpulses durch ein Messmedium wie zum Beispiel Luft unter einem Schrägungswinkel a mit derselben Messstrecke 1 einmal stromaufwärts und einmal stromabwärts messen. Die resutierende Laufzeitdifferenz ist dem Volumendurchfluss proportional.

Aus dieser Literaturstelle, vgl. Seite 115, rechte Spalte, dortige Abbildung ist ein Strömungskanal bekannt, in dessen Wandungen zwei einander zugewandte Sensoren angeordnet sind. Die Stirnseiten, von denen aus die Schallimpulse ausgesammt werden, weisen einander zu.

Aus dem Stand der Technik sind ferner Ultraschall- Strömungssensoren bekannt, die den Strahlverwehrungseffekt innerhalb eines strömenden Mediums ausnutzen, um Strömungsgegeschwindigkeiten zu messen. Ferner sind aus dem Stand der Technik mikromechanische oder folientechnisch hergestellte Ultraschallwandler oder Wandler bekannt.

Aus der DE 44 16 826 A1 ist ein Ultraschallströmungssensor zur Messung des Volumenstromes eines durch einen Strömungskanal strömenden Mediums mit einem Wandlerarray bekannt, welches innerhalb des Strömungsquerschnitts des Strömungskanals angeordnet ist und Ultraschallwellen generiert, die sich im Strömungsquerschnitt des Strömungskanals quer zu einer Strömungsrichtung des strömenden Mediums ausbreiten. Der Ultraschallströmungssensor weist einen Wandler auf, der sendet, und zwei als Empfänger vorgesehene Arrays.

### Darstellung der Erfindung

Erfindungsgemäß wird eine alternierende Anordnung eines Ultraschallwandlers vorgeschlagen, die abwechselnd als Sende- und Empfangs- Antennen wirken. Der schlagende Vorteil der alternierenden Anordnung liegt in einem dadurch erzielten deckungsgleichen, gegenseitig verschränkten Sende- und Empfangsbereich. Dadurch wird in Kombination mit einer einzelnen Ultraschallreflektion innerhalb eines Strömungskanales eine zueinander symmetrische Sende- und Empfangscharakteristik erreicht. Die funktionale Aufteilung des Ultraschallwandlers in Sende- und Empfangselemente ermöglicht dabei eine wirksame Trennung zwischen schwachen Sendesignalen und den starken Empfangssignalen, deren Amplituden sich um mehrere Größenordnungen unterscheiden können. Die Symmetric bzgl. Senden und Empfangen ermöglicht direkte Ultraschall- Rückreflektionen an einer symmetrisch zum Wandlerarray ausgerichteten Fläche, ohne dass beim Senden Phasenverschiebungen zwischen den einzelnen Wandlerelementen erforderlich sind.

Das erfindungsgemäß vorgeschlagene Wandlerarray kann beispielsweise aus einem Siliziumsubstrat mit mikromechanisch gefertigten Tremigräben zwischen den einzelnen Wandlerelementen zur gegenseitigen Entkopplung gefertigt werden. Auf dem Siliziumsubstrat sind streifenförmige Elektroden aufgebracht, über denen eine PVDF- Folie (Polyvinylidenfluorid) als Dickenschwinger aufgetragen wird. Die Folie ist auf der Oberseite mit einer flächigen Gegenelektrode und einer Versiegelung zum mechanischen Schutz versehen. Die Sendeelemente des erfindungsgemäß vorgeschlagenen Ultraschall- Wandlers sind außerhalb des Wandlerarrays elektrisch direkt miteinander kontaktiert und mit einem Oszillator verbunden. Dadurch vermögen die Sendeelemente phasengleich Ultraschallwellen auszusenden. Die Einzelzellen interferieren zu gemeinsamen Wellenfronten, die in erster Näherung eben sind und sich dadurch quer zum strömenden Medium ausbreiten. Die gegenüberliegende Wandung des Strömungsrohrs ist mit einem Krümmungsradius gewölbt, der bevorzug dem doppelten Rohrdurchmesser entspricht, durch welchen das strömende Medium strömt. Aufgrund dieser Anordnung werden die Ultraschallwellen am Ort des Wandlerarrays näherungsweise zu einem Linienfokus kollimiert, dessen Position linear von der Geschwindigkeit des strömenden Mediums abhängt und den Volumenstrom angibt. Da sich kein idealer Linienfokus ergibt, wird das Empfangselement mit der größten empfangenen Intensität bestimmt. Dies erfolgt mit Hilfe eines Komparators und eines Sample & Hold-Verstärkers, die beide durch Operationsverstärker realisiert werden können.

### Zeichnung

Anhand der Zeichnung wird die Erfindung nachstehend eingehender beschrieben.

Es zeigt:
- Figur 1: ein gegenüber einer gewölbten Reflexionsfläche angeordnetes verschränktes Sende- und Empfangs Wandlerarray,
- Figur 1.1: eine Ausführungsvariante einer Auswerteschaltung,
- Figur 2: eine mögliche Anordnung des Wandlerarrays innerhalb eines Strömungsrohres, wobei der Krümmungsradius der Reflexionsfläche dem doppelten des Rohr- durchmessers entspricht,
- Figur 3: die Ausbildung einer strömungsbeschleunigenden Rohverengung durch die An- ordnung des Wandlerarray,
- Figur 4: einen Schnitt durch ein Wandlersubstrat, auf dem das Wandlerarray ausgebildet ist,
- Figur 5: interferierende Ultraschallwellen und
- Figur 6: eine mögliche Ausprägung interferierender Wellenfronten, die mit einer gewölb- ten Reflexionsfläche zusammenwirken.

### Ausführungsvarianten

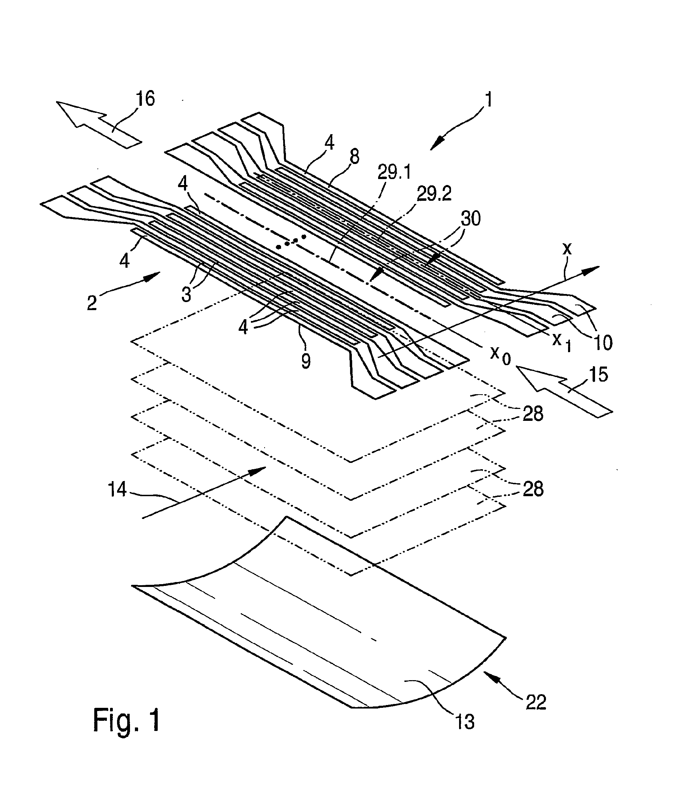

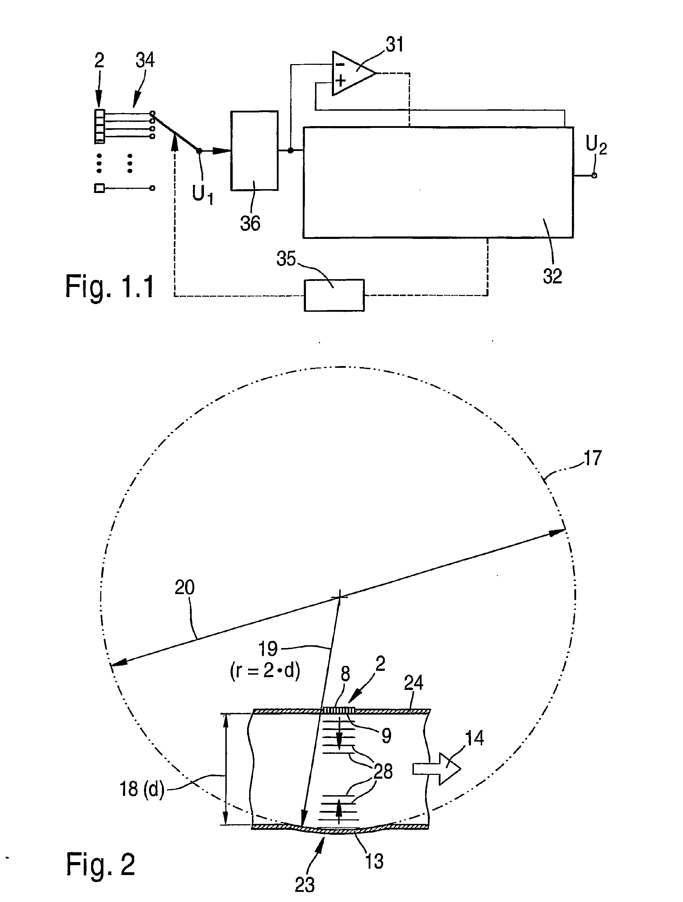

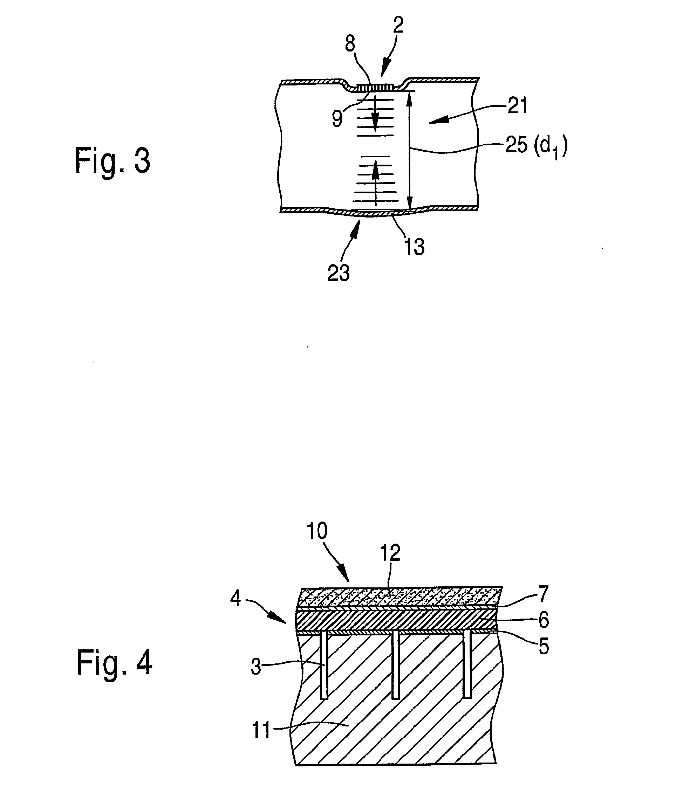

Ein in Figur 1 dargestelltes verschränktes Wandlerarray ist Bestandteil eines Ultraschall-Strömungsssensors 1. Das dargestellte verschränkte Wandlerarray wird vorzugsweise aus einem Siliziumsubstrat gefertigt. Einzelne Wandlerelemente 4 des verschränkten Wandlerarrays 2 sind durch Trenngräben 3 voneinander entkoppelt. Die Trenngräben 3 werden mikromechanisch gefertigt. Auf dem das verschränkte Wandlerarray 2 darstellenden Siliziumsubstrat (vgl. Figur 4, Position 11) befinden sich streifenförmige Elektroden. Die streifenförmigen Elektroden 5 sind mit einer PVDF-Folie 6 (Polyvinylidenfluorid) abgedeckt, die als Dickenschwinger dient. Die PVDF-Folie 6 (Polyvinylidenfluorid) wird auf ihrer Oberseite mit einer flächigen Gegenelektrode 7 und einer Versiegelung 12 zum mechanischen Schutz versehen. Die Versiegelung 12 kann beispielsweise aus Epoxidharz oder Silikon gefertigt werden, während die Gegenelektrode 7 bevorzugt aus Gold oder Aluminium gefertigt ist. Die streifenförmig ausgebildeten Elektroden 5 können aus Aluminium, Gold oder Platin gefertigt werden, während es sich bei dem Trägersubstrat für das Ultraschall Wandlerarray 2 bevorzugt um ein Siliziumsubstrat handelt In einer Ausführungsvariante, die zeichnerisch nicht dargestellt ist, können Abschirmungselektroden zwischen den Sendebeziehungsweise Empfangselektroden des Ultraschall-Waudlerarrays 2 vorgesehen werden, wodurch sich nicht nur eine mechanische, sondern auch eine elektrische Kopplung erreichen lässt. Unter einem Sendeelement 10 (vgl. Darstellung in Figur 4) gehören das Siliziumsubstrat 11, eine streifenförmige Elektrode 5, ein Bereich der PVDF-Folie 6, ein Bereich der Gegenelektrode 7 sowie gegebenenfalls auch die auf diese aufgebrachte Versiegelung 12. Ein Bereich erstreckt sich auf die Region zwischen je zwei benachbarten Trenngräben 3.

Mit Bezugszeichen 10 sind die Sendeelemente des verschränkten Wandlerarrays 2 in der Darstellung gemäß Figur 1 bezeichnet.

Sämtliche Sendeelemente 10 sind außerhalb des verschränkt ausgebildeten Wandlerarrays 2 elektrisch direkt miteinander kontaktiert. Die Sendeelemente 10 sind darüber hinaus mit einem Oszillator 26 verbunden, so dass die Aussendung phasengleicher Ultraschallwellen möglich ist.

Wie aus der Darstellung gemäß Figur 1 weiterhin hervorgeht, ist das verschränkt ausgebildete Wandlerarray 2 senkrecht zur Strömungsrichtung 14 des strömenden Mediums orientiert. Dem verschränkten Wandlerarray 2 gegenüberliegend befindet sich eine gewölbt ausgebildete Reflektionsfläche 13. (Vgl. auch Darstellung gemäß Figur 2).

Das gesendete Signal ist mit Bezugszeichen 15 identifiziert, während das empfangene Signal durch Bezugszeichen 16 gekennzeichnet ist. Die von den Sendeelementen 10 des verschränkten Wandlerarrays 2 ausgehenden phasengleichen Ultraschallwellen 27 interferieren zu gemeinsamen Wellenfronten 28. Die Interferenzerscheinungen sind abhängig von dem räumlichen und zeitlichen Verlauf der Ultraschallwellen durch Auslenkungen der Moleküle in der Luft.

Die zu Wellenfronten 28 interferierenden Ultraschalleinzelwellen 27 sind in erster Näherung eben und breiten sich daher relativ gerichtet quer zum strömenden Medium, das in Strömungsrichtung 14 strömt, aus. Die sich ausbreitenden gemeinsamen Wellenfronten 28 fallen auf eine gegenüberliegende Wandung eines Strömungsrohres 17, welches einen Krümmungsradius 19 aufweist. Der Krümmungsradius 19 entspricht bevorzugt dem doppelten Rohrdurchmesser 20 des Strömungsrohres 17 (r =2d). Aufgrund der Krümmung 23 der Reflexionsfläche 13 werden die sich ausbreitenden Wellenfronten 28 am Ort des verschränkten Wandlerarrays 2 näherungsweise zu einem Linienfokus 29 kolimmiert. Die Position 30 des Linienfokus 29 hängt linear von der Geschwindigkeit des in Strömungsrichtung 14 strömenden Mediums ab. Aufgrund des linearen Zusammenhangs zwischen Strömungsgeschwindigkeit des strömenden Mediums und der Position 30 des Linienfokus 29 kann auf den Volumenstrom des strömenden Mediums, welcher das verschränkte Wandlerarray 2 passiert, direkt geschlossen werden. Da sich in der Regel kein idealer Linienfokus 29 einstellt, wird dasjenige der Empfangselemente ermittelt, welches die größte empfangene Intensität des Ultraschallsignales aufweist. In Figur 1 ist ein erster Linienfokus 29 an der Stelle Xo eingezeichnet, welcher sich ohne strömendes Medium einstellt. Entlang der X-Achse verschiebt sich der erste Linienfokus 29.1 an die mit Bezugszeichen 29.2 gekennzeichnete Stelle (vgl. Position x₁ an der X-Achse). Die Auslenkung des Linienfokus' von Position 29.1 in 29.2 beruht auf der Auslenkung durch das in Strömungsrichtung 14 strömende Medium. Mit Bezugszeichen 28 sind die sich in Richtung auf eine gewölbte Reflexionsfläche 13 ausbreitenden, interferierenden Wellenfronten bezeichnet.

Figur 1.1 ist in schematischer Weise eine Auswerteschaltung zu entnehmen. Die Auswerteschaltung gemäß der Darstellung in Figur 1.1 umfasst einen Signal-Multiplexer 34, der mit dem verschränkten Wandlerarray 2 verbunden ist. Dem Signal-Multiplexer 34 ist eine Signalaufbereitung 36 nachgeschaltet sowie ein Komparator 31. Mit Hilfe des Komparators 31 und einem Sample and Hold-Verstärker 32, der ebenfalls als Operationsverstärker ausgebildet sein kann, lässt sich dasjenige der Empfangselemente mit der größten empfangenen Ultraschallsignalintensität bestimmen. Der Signal-Multiplexer 34 lässt sich über eine Multiplexer-Steuerung 35 ansteuern. Mit U₁ ist das Eingangsspannungssignal, welches am verschränkten Wandlerarray 2 abgegriffen wird, bezeichnet; mit U₂ das ausgangsseitig am Sample and Hold-Verstärker 32 anliegende Spannungssignal. Alternativ kann auch der Schwerpunkt der Intensitätsverteilung ermittelt werden, die sich über sämtliche streifenförmige Elektroden 5 des verschränkten Wandlerarrays 2 des Ultraschallströmungssensors 1 einstellt.

Figur 2 ist ein Querschnitt durch ein Strömungsrohr zu entnehmen, in welchem ein erfindungsgemäß vorgeschlagenes verschränktes Ultraschall- Wandlerarray aufgenommen ist.

Das Strömungsrohr 24 ist durch eine Wandung begrenzt und weist einen Durchmesser 18 auf (vgl. d). In die Wandung des Strömungsrohres 24 ist die Reflexionsfläche 13 integriert, die eine Krümmung 23 aufweist. Der Krümmungsradius 19 der Reflexionsfläche 13 beträgt bevorzugt das Doppelte des Rohrdurchmessers 18. Das verschränkte Wandlerarray 2 ist in der Darstellung gemäß Figur 2 in eine Wandung des Strömungsrohres 24 integriert. Die Strömungsrichtung des strömenden Mediums, dessen Durchflussrate beziehungsweise Volumenstrom zu ermitteln ist, ist durch Bezugszeichen 14 angedeutet und verläuft in der Darstellung gemäß Figur 2 von rechts nach links.

Mit Bezugszeichen 17 ist ein Hilfskreis bezeichnet, welcher einen Radius von etwa dem Doppelten des Durchmessers 18 des Strömungsrohres 24 aufweist. Der Hilfskreis 17 dient dazu, die Krümmung der gewölbt ausgebildeten Reflexionsfläche 13 anzudeuten. Der Darstellung gemäß Figur 2 sind die vom verschränkten Wandlerarray 2 ausgehenden differierenden Wellenfronten 28 zu entnehmen, die sich auf die in der Krümmung 23 ausgebildete gewölbte Reflexionsfläche 13 zubewegen, ebenso wie die von dieser an die Empfangselemente des verschränkten Wandlerarrays 2 reflektierten Wellenfronten 28.

Figur 3 zeigt eine Ausbildungsvariante eines verschränkten Wandlerarrays mit einer strömungsbeschleunigenden Rohrverengung.

Aus der Darstellung gemäß Figur 3 geht hervor, dass das verschränkte Wandlerarray 2 in einer Fläche innerhalb der Rohrwandung des Strömungsrohres 24 aufgenommen ist, welches in einer Krümmung 23 ausgebildet ist. Die Krümmung 23 bilden eine Flächenvertiefung innerhalb der Rohrwandung des Strömungsrohres 24, so dass der Strömungsquerschnitt zwischen der Unterseite 9 des verschränkten Wandlerarrays 2 und der Oberseite der Reflexionsfläche 13 verengt ist, angedeutet durch den Abstand 25 d₁, der kleiner ist als der in Figur 2 dargestellte Abstand 18 d zwischen der Strömungsrohr 24 und der Oberseite der in die Wandung integrierten Reflexionsfläche 13. Mit der in Figur 3 dargestellten Ausführungsvariante ergibt sich eine Querschnittsverengung innerhalb des Strömungsrohres 24, so dass sich der Krümmungsquerschnitt unterhalb des verschränkten Wandlerarrays 2 insgesamt verengt und die Strömung in Strömungsrichtung 14 beschleunigt wird. Dadurch kann eine Ablagerung von Partikeln wie zum Beispiel Staub oder dergleichen an der Innenseite der Wandung des Strömungsrohres 24 sowie an der Unterseite 9 des verschränkten Wandlerarrays 2 wirksam unterbunden werden.

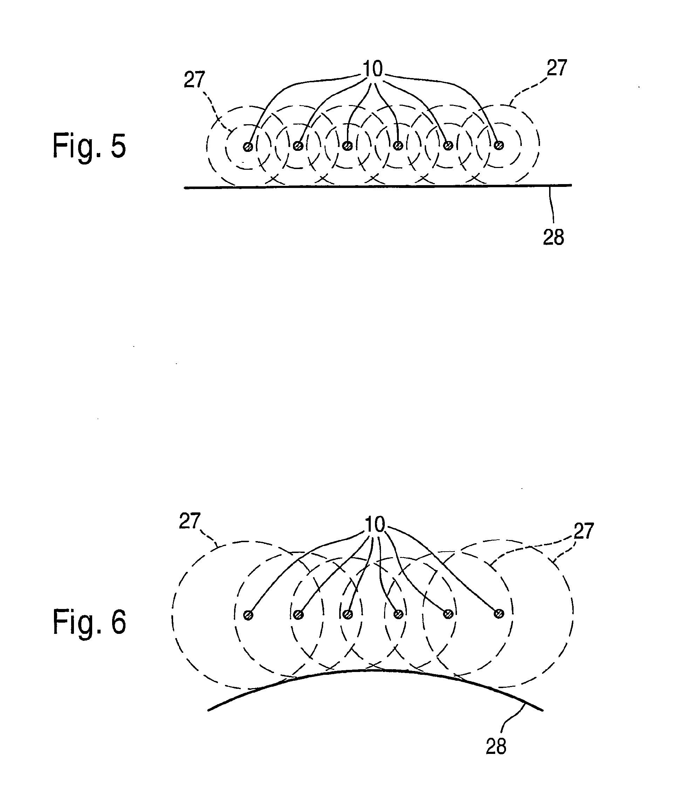

Auf die Ausbildung einer Wölbung in der Reflexionsfläche 13 zur Herbeiführung einer Strahlkollimierung kann dann verzichtet werden, wenn die einzelnen Wandlerelemente des Ultraschall-Strömungssensors phasenverzögert so angeregt werden, dass der Gangunterschied zwischen den einzelnen Ultraschallwellen 27 eine gekrümmt oder flach ausgebildete Wellenfront 28 ergibt (vgl. Figuren 5 und 6). Weisen diese Wellenfront en 28 direkt nach ihrer Emission einen Krümmungsradius auf, der doppelt so groß ist wie der Rohrdurchmesser, dann laufen die Wellen nach Reflexion an der gegenüberliegenden in einen Linienfokus 29 am Ort des beschränkten Wandlerarrays 2 zusammen.

Vorstehend wurde die Bestimmung des Empfangselementes mit der höchsten Intensität erwähnt. Stattdessen könnte auch ein Schwerpunkt an der Intensitätsverteilung des empfangenen Signals bestimmt werden und die Messauflösung somit verbessert werden. Im Allgemeinen gibt sich durch die Reflexionswölbung 13 eine Querschnittserweiterung und damit eine lokale Reduzierung der Strömungsgeschwindigkeit des strömenden Mediums in Strömungsrichtung 14 im Strömungsrohr 24. Dies kann im Einzelfall zu einer verstärkten Ablagerung von Partikeln wie z.B. Staub führen. Die Ablagerung von Staub und anderen im strömenden Medium mitgeführten Partikeln kann durch die in Figur 3 dargestellte Ausführungsvariante unterbunden werden. Durch die erfindungsgemäß vorgeschlagene Ausbildung eines verschränkten Wandlerarrays 2 ist eine alternierende Anordnung von Ultraschallwandlern möglich, die in der Weise abwechselnd als Sende- und Empfangs- Antennen wirken, dass alle emittierten Einzelschallwellen 27 zu gemeinsamen Ultraschallwellenfronten 28 interferieren können.

Der Vorteil der vorgeschlagenen alternierenden Anordnung liegt in einem dadurch erzielten deckungsgleichen, gegenseitig verschränkten Sende- und Empfangsbereich, wodurch in Kombination mit einer einzelnen Ultraschall-Reflexion innerhalb des Strömungsrohres 24 eine symmetrische Sende- und Empfangsanordnung erreicht werden kann. Die funktionale Aufteilung in Sende - und Empfangselemente ermöglicht dabei in vorteilhafter Weise eine Trennung zwischen den schwachen Sende- und den starken Empfangssignalen, deren Amplituden sich um mehrere Größenordnungen voneinander unterscheiden können. Die Symmetrie bezüglich Senden und Empfangen ermöglicht direkte Ultraschall-Rückreflexionen an einer symmetrisch zum Ultraschall-Wandlerarray ausgerichteten Fläche, ohne das beim Senden Phasenverschiebung zwischen den einzelnen Wandlerelementen erforderlich wäre.

Figur 4 ist ein Querschnitt durch ein Wandlerelement 4 zu entnehmen. In dem Siliziumsubstrat 11 sind einzelne Trenngräben 3 ausgebildet. An der Oberseite des Siliziumsubstrates 11 verlaufen die streifenförmigen Elektroden 5, oberhalb die PVDF-Folie 6 aufgebracht wird. Oberhalb der PVDF-Fölie 6 befindet sich die flächige Gegenelektrode 7, die aus einem metallischen Material, zum Beispiel Gold, Aluminium oder Platin gefertigt wird. Optional kann auf die Oberseite der flächigen Gegenelektrode 7 eine Versiegelung 12 in Form einer Epoxidharz-Schutzschicht aufgebracht werden. Mit Bezugszeichen 10 ist die Oberseite eines in Figur 4 beispielhaft dargestellten Sendeelementes bezeichnet. Im Vergleich zu der Dicke der streifenförmigen Elektrode 5 beziehungsweise der flächigen Gegenelektrode 7 weist das Siliziumsubstrat 11, welches das Trägersubstrat darstellt, eine wesentlich größere Dicke auf.

Figur 5 sind von Sendeelementen 10 ausgehende Ultraschall-Einzelwellen 27 zu entnehmen, die sich aufgrund ihrer gegenseitigen Überlappung zu einer interferierenden Wellenfront 28 vereinigen. In der Darstellung gemäß Figur 5 verläuft die sich ausbildende interferierende Wellenfront 28 im Wesentlichen parallel. Im Gegensatz dazu verlaufen die in Figur 6 dargestellten Ultraschall-Einzelwellen aufgrund einer Phasenverschiebung zur Kollimierung ohne gewölbte Reflexionsfläche 13 als gekrümmte Wellenfronten 28.

### Bezugszeichenliste

- 1: Ultraschall-Strömungssensor
- 2: verschränktes Wandlerarray
- 3: Trenngraben
- 4: Wandlerelement
- 5: streifenförmige Elektrode
- 6: PVDF- Folie
- 7: flächige Gegenelektrode
- 8: Oberseite
- 9: Unterseite
- 10: Sendeelement
- 11: Siliziumsubstrat
- 12: Epoxidharz-Schutzschicht
- 13: Reflexionsfläche
- 14: Strömungsrichtung
- 15: gesendetes Signal
- 16: empfangenes Signal
- 17: Hilfskreis
- 18: Abstand (d) Array- Reflexionsfläche
- 19: Krümmungsradius Reflexionsfläche
- 20: Rohrdurchmesser
- 21: Rohrverengung
- 22: Wölbung Reflexionsfläche
- 23: Krümmung
- 24: Strömungsrohr
- 25: d₁ (Abstand in Strömungsverengung)
- 26:
- 27: Ultraschall-Einzelwelle
- 28: interferierende Wellenfronten (gekrümmt oder parallel)
- 29.1: erster Linienfokus (ohne Strömung)
- 29.2: zweiter Linienfokus (mit Strömung)
- 30:
- 31: Komparator
- 32: Sample and Hold-Verstärker
- 33:
- 34: Signal-Multiplexer
- 35: Multiplexer-Steuerung
- 36: analoge Signalaufbereitung

## Patentansprüche

1. Ultraschallströmungssensor zur Messung des Volumenstromes eines strömenden Mediums durch einen Strömungskanal (24), mit einem Ulraschall-Wandlerarray (2), welches innerhalb des Strömungsquerschnittes des Strömungskanales (24) angeordnet ist und welches Ultraschallwellen (27) generiert, die sich im Strömungsquerschnitt des Strömungskanals (24) quer zu einer Strömungsrichtung (14) des strömenden Mediums ausbreiten, **dadurch gekennzeichnet, dass** das Ultraschall-Wandlerarray (2) eine verschränkte Anordnung von Wandlerelementen (4) aufweist, die abwechselnd als Sende-(10) und Empfangs-Elemente wirken.

2. Ultraschallströmungssensor gemäß Anspruch 1, **dadurch gekennzeichnet, dass** die einzelnen Wandlerelemente (4) in das verschränkt ausgebildete Wandlerarrays (2) durch Trenngräben (3) voneinander entkoppelt sind.

3. Ultraschallströmungssensor gemäß Anspruch 1, **dadurch gekennzeichnet, dass** dem verschränkt ausgebildeten Ultraschall-Wandlerarray (2) eine von diesem um einen Abstand (18, 25) entfernte Reflexionsfläche (13) zu geordnet ist, die einen Krümmungsradius (19) aufweist.

4. Ultraschallströmungssensor gemäß Anspruch 3, **dadurch gekennzeichnet, dass** der Krümmungsradius (23) der Reflexionsfläche (13) das Doppelte des Rohrdurchmessers (20) des Strömungskanals (17) beträgt.

5. Ultraschallströmungssensor gemäß Anspruch 1, **dadurch gekennzeichnet, dass** das verschränkt ausgebildete Ultraschall-Wandlerarray (2) an einer eine Querschnittsverengung eines Teilströmungsquerschnittes des Strömungskanales (24) bewirkenden Wand aufgenommen ist

6. Ultraschallströmungssensor gemäß Anspruch 5, **dadurch gekennzeichnet, dass** die die Querschnittsverengung bewirkende Einschnürung des Strömungsrohres (24) der Reflexionsfläche (13) zuweisende Krümmungen enthält.

7. Ultraschallströmungssensor gemäß Anspruch 1, **dadurch gekennzeichnet**, das s dieser eine Auswerteschaltung umfasst, welche mittels eines steuerbaren Signal-Multiplexers die einzelnen Empfangselemente des verschränkten Wandlerarrays (2) abtastet, die empfangenen Signale einer analogen Signalaufbereitung (36) zuleitet, der ein Komparator (31) sowie ein Sample and Hold-Verstärker (32) nachgeschaltet sind.

8. Ultraschallströmungssensor gemäß Anspruch 1, **dadurch gekennzeichnet, dass** das verschränkte Wandlerarray (2) an einer Oberseite (8) streifenförmige Elektroden (5) aufweist, die durch eine PVDF-Folie (6) von flächigen Gegenelektroden (7) getrennt sind.

9. Ultraschallströmungssensor gemäß Anspruch 8, **dadurch gekennzeichnet, dass** oberhalb der flächigen Gegenelektrode (7) eine Versiegelung (12) ist.

10. Ultraschallströmungssensor gemäß Anspruch 1, **dadurch gekennzeichnet, dass** eine Verschiebung eines Linienfokus (29) von einer ersten Position (29.1) an eine zweite Position (29.2) detektiert wird.

## Claims

1. Ultrasonic flow sensor for measuring the volumetric flow of a flowing medium through a flow channel (24), having an ultrasonic transducer array (2) which is arranged inside the flow cross section of the flow channel (24) and generates ultrasonic waves (27) which propagate transversely with respect to a direction of flow (14) of the flowing medium in the flow cross section of the flow channel (24), **characterized in that** the ultrasonic transducer array (2) has an interleaved arrangement of transducer elements (4) which alternately act as transmitting elements (10) and receiving elements.

2. Ultrasonic flow sensor according to Claim 1, **characterized in that** the individual transducer elements (4) in the interleaved transducer array (2) are decoupled from one another by means of isolating trenches (3).

3. Ultrasonic flow sensor according to Claim 1, **characterized in that** a reflection surface (13) which is at a distance (18, 25) from the ultrasonic transducer array and has a radius of curvature (19) is assigned to the interleaved ultrasonic transducer array (2).

4. Ultrasonic flow sensor according to Claim 3, **characterized in that** the radius of curvature (23) of the reflection surface (13) is twice the tube diameter (20) of the flow channel (17).

5. Ultrasonic flow sensor according to Claim 1, **characterized in that** the interleaved ultrasonic transducer array (2) is accommodated on a wall which constricts the cross section of a partial flow cross section of the flow channel (24).

6. Ultrasonic flow sensor according to Claim 5, **characterized in that that** constriction of the flow tube (24) which constricts the cross section contains curvatures which face the reflection surface (13).

7. Ultrasonic flow sensor according to Claim 1, **characterized in that** said sensor comprises an evaluation circuit which scans the individual receiving elements of the interleaved transducer array (2) using a controllable signal multiplexer and passes the received signals to an analogue signal conditioning means (36) which has a comparator (31) and a sample and hold amplifier (32) connected downstream of it.

8. Ultrasonic flow sensor according to Claim 1, **characterized in that** the interleaved transducer array (2) has, on a top side (8), strip-type electrodes (5) which are separated from flat counter-electrodes (7) by means of a PVDF film (6).

9. Ultrasonic flow sensor according to Claim 8, **characterized in that** there is a seal (12) above the flat counter-electrode (7).

10. Ultrasonic flow sensor according to Claim 1, **characterized in that** a shift in a line focus (29) from a first position (29.1) is detected at a second position (29.2).

## Revendications

1. Débitmètre à ultrasons destiné à mesurer le débit volumique d'un fluide qui s'écoule dans un canal d'écoulement (24) et présentant une série (2) de convertisseurs d'ultrasons disposée à l'intérieur de la section transversale d'écoulement du canal d'écoulement (24) et produisant des ondes ultrasoniques (27) qui se propagent transversalement à la direction d'écoulement (14) du fluide qui s'écoule dans la section transversale d'écoulement du canal d'écoulement (24), **caractérisé en ce que**
la série (2) de convertisseurs d'ultrasons présente un agencement rétréci d'éléments de convertisseur (4) qui agissent en alternance comme éléments émetteurs (10) et éléments récepteurs.

2. Débitmètre à ultrasons selon la revendication 1, **caractérisé en ce que** les différents éléments de convertisseur (4) de la série rétrécie (2) de convertisseurs sont découplées les uns des autres par des sillons de séparation (3).

3. Débitmètre à ultrasons selon la revendication 1, **caractérisé en ce qu'**une surface réfléchissante (13) éloignée de la série rétrécie (2) de convertisseurs d'ultrasons d'une distance (18, 25) est associée à cette série et présente un rayon de courbure (19).

4. Débitmètre à ultrasons selon la revendication 3, **caractérisé en ce que** le rayon de courbure (23) de la surface réfléchissante (13) correspond au double du diamètre du tube (20) du canal d'écoulement (17).

5. Débitmètre à ultrasons selon la revendication 1, **caractérisé en ce que** la série rétrécie (2) de convertisseurs d'ultrasons est logée dans une paroi qui a pour effet un rétrécissement d'une partie de la section transversale d'écoulement du canal d'écoulement (24).

6. Débitmètre à ultrasons selon la revendication 5, **caractérisé en ce que** le rétrécissement du tube d'écoulement (24) qui a pour effet un rétrécissement de la section transversale présente des courbures orientées vers la surface réfléchissante (13).

7. Débitmètre à ultrasons selon la revendication 1, **caractérisé en ce qu'**il comprend un circuit d'évaluation qui échantillonne les différents éléments de réception de la série rétrécie (2) de convertisseurs au moyen d'un multiplexeur asservi de signaux qui amène les signaux reçus à un traitement analogique (36) des signaux suivi par un comparateur (31) ainsi que par un amplificateur (32) d'échantillonnage et de maintien.

8. Débitmètre à ultrasons selon la revendication 1, **caractérisé en ce que** la série rétrécie (2) de convertisseurs présente sur son côté supérieur (8) des électrodes (5) en forme de ruban séparées d'électrodes complémentaires (7) par une feuille (6) en PVDF.

9. Débitmètre à ultrasons selon la revendication 8, **caractérisé en ce qu'**un scellement (12) est prévu au-dessus de l'électrode complémentaire plane (7).

10. Débitmètre à ultrasons selon la revendication 1, **caractérisé en ce que** le décalage d'une ligne focale (29) depuis une première position (29.1) jusqu'à une deuxième position (29.2) est détecté.
